# EUROPÄISCHE PATENTSCHRIFT

(11) **EP 0 512 091 B1**
(45) Veröffentlichungstag und Bekanntmachung des Hinweises auf die Patenterteilung: **12.04.1995**
(21) Anmeldenummer: 91920272.1
(22) Anmeldetag: 21.11.1991
(51) Int. Cl.: B60P 1/02

(54) **FAHRZEUG ZUM TRANSPORTIEREN VON LASTEN**
VEHICLE FOR TRANSPORTING LOADS
VEHICULE POUR LE TRANSPORT DE CHARGES

(30) Priorität: 22.11.1990 DE 4037191
(43) Veröffentlichungstag der Anmeldung: 11.11.1992
(73) Patentinhaber: FRITSCH, Michael, D-82275 Emmering (DE)
(72) Erfinder: Fritsch, Peter, D-8080 Fürstenfeldbruck (DE)
(74) Vertreter: Dickel, Klaus, Dipl.-Ing.
(86) Internationale Anmeldenummer: DE9100919
(87) Internationale Veröffentlichungsnummer: WO9209452

(56) Entgegenhaltungen:
- DE-A- 3 923 373
- DE-U- 8 234 715
- DE-U- 9 001 947
- GB-A- 1 031 123
- GB-A- 1 944 351

## Beschreibung

Die Erfindung betrifft ein Fahrzeug zum Transportieren von Lasten gemäß dem Oberbegriff des Patentanspruchs 1.

Das Be- und Entladen eines Lastkraftwagens, insbesondere im Zustelldienst, über eine Hubbühne an der Rückseite des Fahrzeuges ist zeitaufwendig und umständlich, so daß bereits Fahrzeuge mit einem absenkbaren Frachtraumkasten eingesetzt werden.

So offenbart die GB-A-1 031 123 einen Lastkraftwagen mit einem selbsttragenden Frachtraumkasten, der bis in die Nähe des Bodens abgesenkt werden kann, um das Beladen zu erleichtern.

Weiterhin offenbart die DE-A-39 23 373 ein Anhängefahrzeug mit einer bis auf den Boden absenkbaren Ladeplattform, wobei nach dem Absenken die Achsen von der Ladeplattform abgenommen werden können, so daß die Ladeplattform selbst allseits frei zugänglich ist und problemlos mit sperrigen Lasten beladen werden kann.

Ausgehend von dem aus GB-A-1 031 123 bekannten Stand der Technik, liegt der Erfindung die Aufgabe zugrunde, ein Fahrzeug der eingangs genannten Art zu schaffen, das ein einfaches und rasches Be- und Entladen ermöglicht und außerdem eine einfache Wartung von Motor, Achsen und Lenkung gewährleistet.

Diese Aufgabe wird erfindungsgemäß durch die Merkmale des Anspruchs 1 gelöst. Eine vorteilhafte Ausführungsform der Erfindung ist im Anspruch 2 beschrieben.

Beim erfindungsgemäßen Fahrzeug ist der selbsttragende Frachtraumkasten mit einer durchgehenden ebenen Ladefläche versehen. Weiterhin ist die eine Motorkabine tragende hintere Achse und/oder die vordere Lenkachse mit der Fahrerkabine mittels der Hubeinrichtungen derart bezüglich des Frachtraumkastens anhebbar, daß sie sich in einer im Vergleich zur Fahrposition erhöhten Position befinden.

Zum Beladen bzw. Entladen kann der Frachtraumkasten auf die Höhe einer Laderampe gehoben oder auf die Straßenoberfläche abgesenkt werden. Die Längsseiten des Fahrzeuges sind zum Be- und Entladen beidseits voll zugänglich. Die Bordwände können seitlich abgeklappt werden und sind dann befahrbar. Ist der Frachtraumkasten abgesenkt, so können die Vorder- und die Hinterachse unabhängig voneinander für Servicearbeiten auf die gewünschte Arbeitshöhe angehoben werden.

Vorzugsweise ist der Antrieb über der Hinterachse in einer hinteren schallisolierten Motorkabine angeordnet. Die Lenkachse kann dann auf größere Lenkeinschläge ausgelegt werden.

Ein Ausführungsbeispiel der Erfindung ist nachstehend anhand der Zeichnung näher erläutert. Es zeigt:
- Fig. 1: eine perspektivische Ansicht eines Lastkraftwagens mit Anhänger,
- Fig. 2: eine Seitenansicht des Lastkraftwagens,

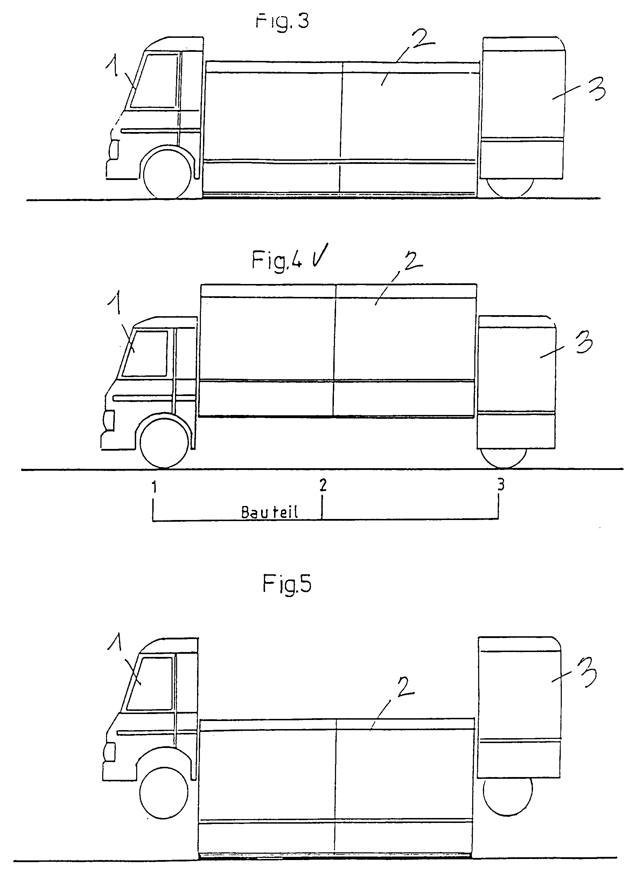

- Fig. 3: die Seitenansicht des Lastkraftwagens mit abgesenktem Frachtraumkasten,
- Fig. 4: eine Seitenansicht des Lastkraftwagens mit auf Rampenhöhe angehobenem Frachtraumkasten,
- Fig. 5: eine Seitenansicht des Lastkraftwagens mit für Arbeitszwecke angehobenen Kabinen und
- Fig. 6: eine Draufsicht teilweise im Schnitt auf die Führungen zwischen dem Frachtraumkasten und der Kabine.

Das in der Zeichnung dargestellte Fahrzeug besteht aus drei Bauteilen, nämlich der Fahrerkabine 1, einem Frachtraumkasten 2 und einer Motorkabine 3. Die Fahrerkabine 1 sitzt über der vorderen Lenkachse 4 und trägt eine vordere Hubeinrichtung (nicht dargestellt). Die hintere Motorkabine 3 dient zum Einbau der hinteren Antriebsachse 5 mit dem Motor und Getriebe, sowie Brennstofftank und Hydraulikaggregate und eine hintere Hubeinrichtung (nicht dargestellt). Zwischen den Kabinen ist der Frachtraumkasten 2 angeordnet. Der Frachtraumkasten ist selbsttragend ausgebildet, da das Fahrzeug keinen üblichen Fahrzeugrahmen aufweist. Vielmehr ersetzt der Frachtraumkasten 2 in seiner Konstruktion den üblichen Fahrzeugrahmen. Deshalb weist der Frachtraumkasten tragende Elemente auf, insbesondere in der Decken- und Bodenkonstruktion sowie in den vorderen und hinteren Bordwänden. Die Seitenwände 6 des Frachtraumkastens 2 sind um die Achse 7 klappbar und können zum Beund Entladen abgeklappt werden. Vorzugsweise sind die Bordwände keilförmig, um den Höhenunterschied zwischen Frachtraumboden und Boden auszugleichen. Um den Ladevorgang nicht zu erschweren, soll die Bodenkonstruktion des Frachtraumkastens so flach wie möglich ausgebildet sein. Es ist zweckmäßig, die Lastaufnahme der Bodenkonstruktion wenigstens teilweise über seitliche Rungen 8 an die entsprechend steife Deckenkonstruktion 9 zu übertragen.

Eine Führungsanordnung zwischen dem Frachtraumkasten 2 und der hinteren Motorkabine 3 ist in Fig. 6 dargestellt. An der Stirnwand 10 des Frachtraumkastens 2 sind beidseits Profilschienen 11 befestigt, in denen mittels Führungsrollen 12 ein Tragrahmen 14 läuft, der auf der Hinterachse aufliegt und den Motor mit Kabine aufnimmt. Innerhalb des Rahmens 14 ist ein Hubzylinder 15 angeordnet, dessen Kolbenstange am oberen Ende mit dem Frachtraumkasten verbunden ist. Dies ist im einzelnen nicht dargestellt. Die Führungsrollen 12 ermöglichen ein verkantungsfreies Anheben und Absenken des Frachtraumkastens 2. Hierzu sind die seitlichen Schienen 11 vorgesehen, wobei beidseits des Rahmens 14 die Führungsrollen 12 mit den Schenkeln des Profils zusammenwirken, um ein Auseinanderdrücken der Führungsschienen zu verhindern. Im einzelnen wird hierzu auf das in Fig. 5 dargestellte Profil hingewiesen. Die Führung zwischen der Vorderachse mit Fahrerkabine 1 und dem Frachtraumkasten 2 ist in entsprechender Weise ausgeführt.

Sämtliche Elektro-, Hydraulik-, Luft- und Versorgungsleitungen sowie die dazugehörigen Behälter sind auf dem Frachtraumkasten montiert, so daß sie den Einwirkungen der Straße entzogen sind.

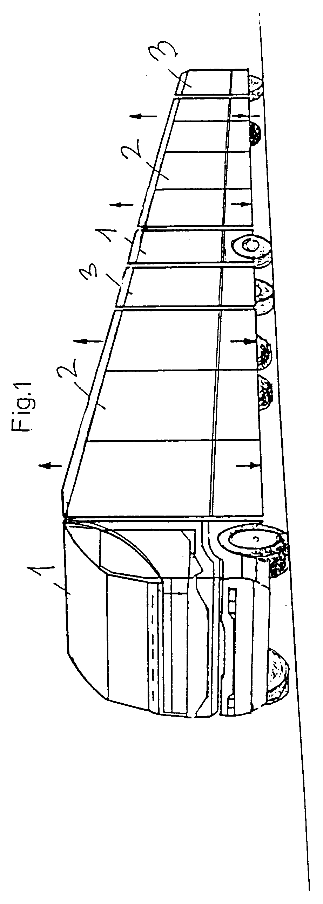

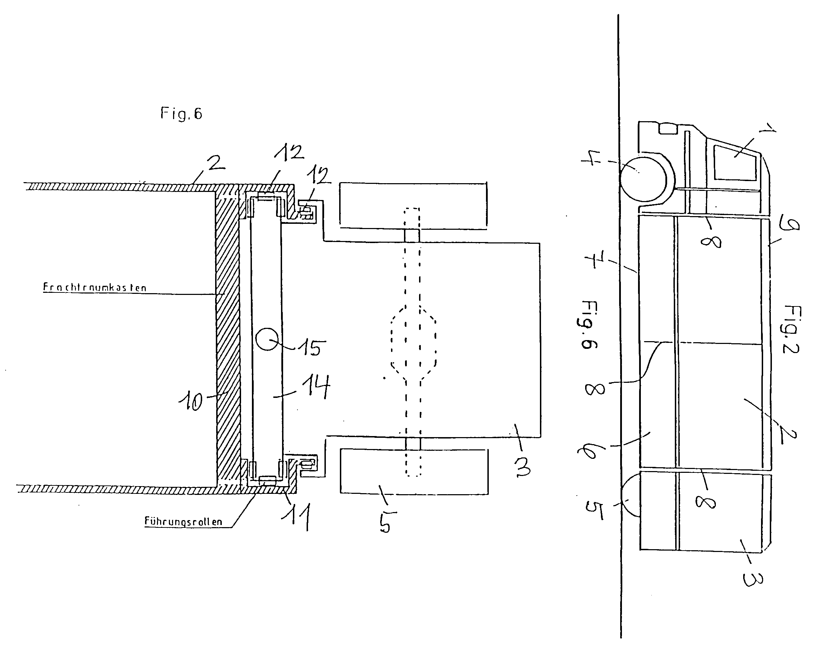

In den Zeichnungen ist dargestellt, wie der Frachtraumkasten bzw. die Kabinen gehoben und gesenkt werden können, um das Be- und Entladen zu erleichtern und die Ladezeiten zu verkürzen. In dem in Fig. 2 dargestellten Fahrzustand wird über die Hubeinrichtungen der Frachtraumkasten verriegelt. Je nach Straßenzustand läßt sich die Verriegelung auf zwei unterschiedliche Höhen einstellen. Aus Fig. 1 geht hervor, daß ein Anhänger für das Motorfahrzeug in entsprechender Weise ausgebildet sein kann.

## Patentansprüche

1. Fahrzeug zum Transportieren von Lasten mit einer eine Fahrerkabine (1) tragenden vorderen Lenkachse (4), einem hieran angeschlossenen selbsttragenden Frachtraumkasten (2) sowie einer hinteren Achse (5), wobei der Frachtraumkasten (2) stirnseitig jeweils mit Führungsschienen (11) versehen ist, die mit Hubeinrichtungen (15) und Führungsrollen (12) der vorderen Lenkachse (4) einerseits und der hinteren Achse (5) andererseits zur Höhenverstellung des Frachtraumkastens (2) in Eingriff stehen,
**dadurch gekennzeichnet,**
daß der selbsttragende Frachtraumkasten (2) eine durchgehende ebene Ladefläche aufweist und daß die eine Motorkabine (3) tragende hintere Achse (5) und/oder die vordere Lenkachse (4) mit der Fahrerkabine (1) mittels der Hubeinrichtungen (15) derart bezüglich des Frachtraumkastens (2) anhebbar sind, daß sie sich in einer im Vergleich zur Fahrposition erhöhten Position befinden.

2. Fahrzeug nach Anspruch 1, dadurch gekennzeichnet, daß an die Ladefläche des Frachtraumkastens (2) schwenkbare Seitenwände (6) angelenkt sind, die zum Be- und Entladen befahrbar sind.

## Claims

1. Vehicle for transporting loads, having a front steering axle (4) carrying a driver's cab (1), a self-supporting freight box (2) connected to the front axle, as well as a rear axle (5), the freight box (2) being provided at each end with guide rails (11) which are in engagement with lifting devices (15) and guide rollers (12) of the front steering axle (4) on the one hand and with the rear axle (5) on the other hand for vertical adjustment of the freight box (2),
characterized in that
the self-supporting freight box (2) has a continuous, flat loading surface and that the rear axle (5) carrying a motor cabin (3) and/or the front steering axle (4) having the driver's cab (1) may be raised relative to the freight box (2) by means of the lifting devices (15) in such a way as to be situated in an elevated position compared to the driving position.

2. Vehicle according to claim 1, characterized in that coupled to the loading surface of the freight box (2) are side walls (6), which are capable of swivelling and may be used for loading and unloading purposes.

## Revendications

1. Véhicule pour transporter des charges, comprenant un essieu directeur avant (4) portant une cabine de conduite (1), un caisson auto-porteur (2) se raccordant à cette cabine et formant un volume à fret, ainsi qu'un essieu arrière (5), le caisson (2) étant doté sur ses faces frontales respectivement de rails de guidage (11) qui sont en engagement avec des dispositifs de levage (15) et des galets de guidage (12) de l'essieu directeur avant (4) d'une part et de l'essieu arrière (5) d'autre part, en vue du déplacement en hauteur du caisson (2) formant volume à fret,
caractérisé en ce que le caisson auto-porteur présente une surface de chargement plane continue, et en ce que l'essieu arrière (5), qui porte une cabine à moteur (3), et/ou l'essieu directeur avant (4), avec la cabine de conducteur (1), sont susceptibles d'être levés au moyen des dispositifs de levage (15) par rapport au caisson (2) de telle manière qu'ils se trouvent dans une position surélevée par comparaison à la position de circulation.

2. Véhicule selon la revendication 1, caractérisé en ce qu'il est prévu des parois latérales basculantes (6) articulées à la surface de chargement du caisson (2), lesdites parois latérales étant accessibles pour le chargement et le déchargement.
